# EUROPEAN PATENT SPECIFICATION

(11) **EP 3 424 825 B1**
(45) Date of publication and mention of the grant of the patent: **12.02.2020**
(21) Application number: 16892707.7
(22) Date of filing: 01.12.2016
(51) Int. Cl.: B65B 5/06, B65B 57/00, B65B 5/02, B65B 57/12, B65B 59/02, B65B 43/44, B65B 51/06, B65B 35/38, B65B 5/10, G05B 19/418, B65B 65/00, B65G 47/51

(54) **BOX-PACKING DEVICE**
SCHACHTELVERPACKUNGSVORRICHTUNG
DISPOSITIF D'EMBALLAGE EN BOÎTES

(30) Priority: 01.03.2016 JP 2016039380
(43) Date of publication of application: 09.01.2019
(73) Proprietor: Ishida Co., Ltd., Kyoto 606-8392 (JP)
(72) Inventor: WATANABE, Kousuke, Ritto-shi Shiga 520-3026 (JP); KAWANISHI, Norio, Ritto-shi Shiga 520-3026 (JP)
(74) Representative: Gill Jennings & Every LLP
(86) International application number: PCT/JP2016/085700
(87) International publication number: WO 2017/149872

(56) References cited:
- EP-A1- 2 075 659
- JP-A- H07 291 228
- JP-A- H09 293 153
- JP-A- H09 293 153
- JP-A- H11 342 902
- JP-A- H11 342 902
- JP-A- 2009 249 017
- JP-A- 2014 234 183
- US-A1- 2009 118 842

## Description

### TECHNICAL FIELD

The present invention relates to a boxing device that packs a product into a box for packaging formed from a sheet-form member.

### BACKGROUND ART

Conventionally, there have been known boxing devices which are used in factories and the like, and in which a plurality of products discharged from a packaging machine that packages commodities and discharges the commodities as products are packed into a box for packaging (packaging box) formed from a sheet-form member. For example, Patent Literature 1 (Japanese Patent No. 4027506) discloses a boxing device having a boxing mechanism that superimposes and packs into a packaging box a plurality of products discharged from a bag-making and packaging machine that packages a predetermined quantity of commodities in a bag-form packaging material and discharges the package as a product.

JP-A-09293153 describes a machine for packing liquid filled containers into boxes and attempts to match the box production with the volume of liquid available for filling.

### SUMMARY OF THE INVENTION

### <Technical Problem>

In a boxing device such as is described in JP-B-4027506, in a scenario in which the device is operating and a packaging box for the next boxing step is not being held in standby (i.e., packaging boxes are not being stocked), when the box-making machine has stopped (normally stopped or abnormally stopped) for some reasons, such as there being no more sheet-form members, productivity could decrease because the boxing step can not be performed. In view of this, a stocking space to stock a plurality of packaging boxes is normally formed in a boxing device, and the device is operated with a predetermined number of packaging boxes stocked in this stocking space.

Because packaging boxes packed with products differ with each type of product packed therein (packed product), when the type of packed product is switched, it is normal for the packaging box to be switched to another type of the packaging box. Concerning this switch, when the type of packed product is switched, the stocked packaging box is sometimes discarded. In such scenarios, as the numerical quantity of stocked packaging boxes increases, there is also likely to be an increase in the numerical quantity of packaging boxes discarded when the type of packed product switches. When the numerical quantity of discarded packaging boxes increases, cost is increased in association with the fact that the materials used to make boxes are not utilized effectively.

In view of this, an object of the present invention is to provide a boxing device to restrain productivity decreases and restrain cost increases.

### <Solution to Problem>

A boxing device according to a first aspect of the present invention comprises a stacking section inside of which a stocking space for stocking a plurality of packaging boxes made from sheet-form members is formed; a packing section configured and arranged to receive packaging boxes sent from the stocking section; a boxing mechanism configured and arranged to perform a boxing action of packing a plurality of products discharged from a packaging machine, which is configured to package supplied commodities into a bag formed of packaging material and to discharge the package as a product, into the packaging boxes placed on the packing section; and a controller configured and arranged to execute a stocking number deciding process to decide a numerical quantity of the packaging boxes stocked in the stocking space on the basis of predetermined information, the controller configured and arranged to execute the stocking number deciding process on the basis of packaging-machine-related information relating to an operating situation of the packaging machine, and/or user-set information set by a user.

In the boxing device according to the first aspect of the present invention, the controller executes the stocking number deciding process to decide the numerical quantity of packaging boxes stocked in the stocking space, on the basis of the packaging-machine-related information relating to the operating situation of the packaging machine and/or the user-set information set by a user. The numerical quantity (stocking number) of stocked packaging boxes is thereby decided on the basis of the packaging-machine-related information and/or the user-set information. As a result, when the device is operating, the stocking number can be adjusted in real time. For example, when the boxing device is operating, the stocking number deciding process is executed on the basis of the packaging-machine-related information, whereby the stocking number can be reduced in accordance with the remaining numerical quantity of products to undergo the boxing action while a predetermined numerical quantity of packaging boxes is stocked. An alternative is that when the device is operating, the stocking number deciding process is executed on the basis of the user-set information, whereby the stocking number can be set to the necessary minimum numerical quantity, which is based on user settings.

Consequently, the discarding of stocked packaging boxes is restrained while restraining the stopping of the boxing action when the box-making machine has stopped for any reason. Specifically, cost increase is restrained while decrease in productivity is restrained.

The "packaging-machine-related information" is, for example, information specifying the weight of the commodities in a device upstream of the packaging machine or the weight of the commodities supplied to the packaging machine, or information specifying, *inter alia,* the remaining numerical quantity of products to undergo the boxing action, which is calculated on the basis of the weight of the commodities in a device upstream of the packaging machine or the weight of the commodities supplied to the packaging machine.

The "user-set information" is, for example, information a numerical quantity set by the user pertaining to the stocking number.

The packaging-machine-related information may be information specifying the weight of the commodities.

Due to this, the stocking number is decided on the basis of the weight of the commodities supplied to the packaging machine. As a result, the stocking number can be reduced to the necessary minimum quantity as the weight of the commodities supplied to the packaging machine decreases (i.e., the remaining numerical quantity of products to undergo the boxing action becomes fewer).

The controller preferably calculates a remaining numerical quantity of the products to undergo the boxing action on the basis of the packaging-machine-related information. The controller executes the stocking number deciding process on the basis of the calculated remaining numerical quantity.

Due to this, the remaining numerical quantity of products to undergo the boxing action is calculated on the basis of the packaging-machine-related information, and the stocking number of packaging boxes is decided on the basis of the calculated remaining numerical quantity. As a result, as the remaining numerical quantity of products to undergo the boxing action decreases, it becomes possible for the numerical quantity of stocked packaging boxes to be reduced with high accuracy to the necessary minimum quantity.

Preferably, the controller executes the stocking number deciding process also on the basis of the numerical quantity of the products packed into the packaging boxes.

The stocking number of packaging boxes is thereby decided also on the basis of the numerical quantity of products packed into one packaging box. As a result, as the remaining quantity of products to undergo the boxing action decreases, it becomes possible for the numerical quantity of packaging boxes to be reduced with high accuracy to the necessary minimum quantity.

The boxing device may further comprise a command input part. A command for the controller is inputted through the command input part. The controller has a first control mode and a second control mode as control modes. The controller transitions from the first control mode to the second control mode on the basis of the command inputted to the command input part. The controller executes the stocking number deciding process in the second control mode.

Due to this, a transition is made from the first control mode to the second control mode and the stocking number deciding process is performed on the basis of a command inputted by the user. Specifically, the user is able to select, as necessary, whether or not to perform the stocking number deciding process. Consequently, convenience and versatility are improved.

The boxing device may further comprise a box-making section. The box-making section performs a step of making the packaging boxes. When the remaining numerical quantity of the products to undergo the boxing action is assumed to be less than a first threshold value, the controller outputs a stop signal to the box-making section. The stop signal instructs the box-making section to stop the step of making the packaging boxes.

Due to this, the step of making the packaging boxes is stopped on the basis of the stocking number calculated on the basis of the stocking number deciding process, and the remaining numerical quantity of products to undergo the boxing action. As a result, as the remaining numerical quantity of products to undergo the boxing action decreases, it becomes possible for the numerical quantity of stocked packaging boxes to be reduced with high accuracy to the necessary minimum quantity.

### EFFECTS OF THE INVENTION

With the boxing device according to the present invention, it is possible for the stocking number to be adjusted in real time when the device is operating. For example, when the device is operating, the stocking number deciding process is executed on the basis of the packaging-machine-related information, whereby the stocking number can be reduced in accordance with the remaining numerical quantity of products to undergo the boxing action, while a predetermined numerical quantity of packaging boxes is stocked. Alternatively, when the device is operating, the stocking number deciding process is executed on the basis of the user-set information, whereby the stocking number can be set to the necessary minimum numerical quantity, which is based on user settings.

Consequently, the discarding of stocked packaging boxes is restrained while the stopping of the boxing action during stopping of the box-making machine for any reason is also restrained. Specifically, cost increases are restrained while decreases in productivity are restrained.

### BRIEF DESCRIPTION OF THE DRAWINGS

FIG. 1 is a schematic view of an overall configuration of a product production line including a boxing device according to one embodiment of the present invention;
FIG. 2 is an external view of one example of a product;
FIG. 3 is a block diagram (schematic view of a controller) schematically depicting a configurational aspect of a management computer, and other equipment connected to the management computer;
FIG. 4 is a schematic view of the general configuration of a combination weighing machine;
FIG. 5 is a schematic view of the general configuration of a bag-making and packaging machine;
FIG. 6 is a schematic view showing a boxing device in planar fashion;
FIG. 7 is a schematic view roughly showing part of a configurational aspect of a box-making section and a boxing section;
FIG. 8 is a side view of one example of a box-making sheet as seen from an x-axis direction;
FIG. 9 is a side view of one example of a box-making sheet as seen from a y-axis direction;
FIG. 10 is a perspective view of one example of a cardboard box;
FIG. 11 is a plan view of one example of a cardboard box;
FIG. 12 is a perspective view of one example of a square tube;
FIG. 13 is a schematic view roughly showing a configurational aspect of a boxing section;
FIG. 14 is a schematic view showing in planar fashion a box-backing section first unit configured in a two-tier portion of a frame;
FIG. 15 is a schematic view showing in planar fashion a box-backing section second unit configured in a one-tier portion of the frame;
FIG. 16 is a block diagram showing some of the functional parts actualized in the controller; and
FIG. 17 is a flowchart showing one example of the flow of the stocking number deciding process.

### DESCRIPTION OF EMBODIMENTS

Below is a description, made with reference to the drawings, of a boxing device 40 according to one embodiment in of the present invention. The following embodiment is a specific example of the present invention and is not intended to limit the technical range of the present invention, and changes can be made as appropriate within a range that does not deviate from the scope of the invention.

The boxing device 40 according to an embodiment of the present invention is included in a product production line 100.

### (1) Overall configuration

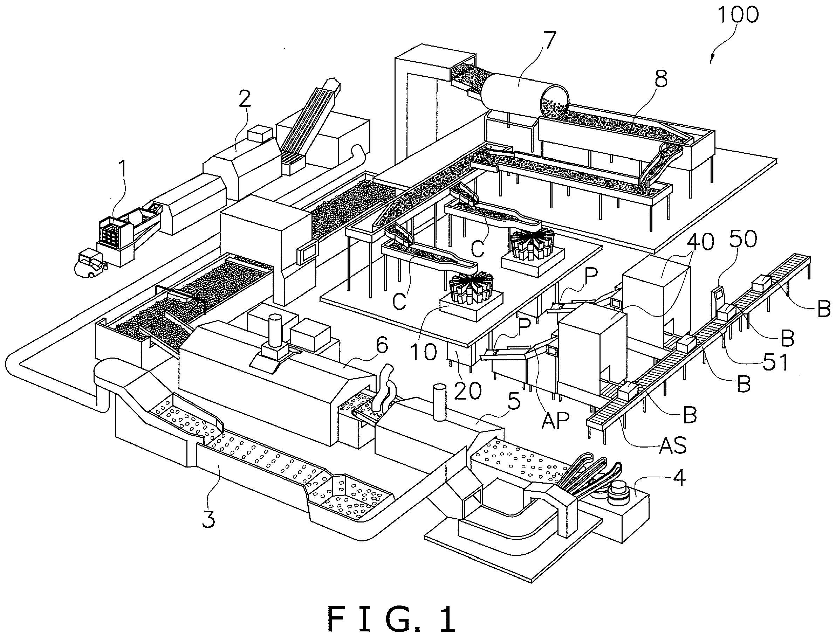

FIG. 1 is a schematic view of an overall configuration of the product production line 100 including the boxing device 40 according to one embodiment of the present invention. A crate damper 1, a peeler 2, an inspection table 3, a slicer 4, a blancher 5, a fryer 6, a flavoring device 7, a fastback 8, a combination weighing machine 10, a bag-making and packaging machine 20, the boxing device 40, and a weight checker 50 are linked in the order listed and installed in the product production line 100.

Potatoes, the starting material for potato chips, are carried in crates to the product production line 100. The crate damper 1 receives the crates containing potatoes, takes the potatoes out of the crates, and carries the potatoes to the peeler 2. The crate damper 1 washes the potatoes with water and removes mud and gravel adhering to the potatoes.

While washing the potatoes with water, the peeler 2 peels away the skins. Potatoes with the skin peeled off are carried to the inspection table 3.

On the inspection table 3, the state of the potatoes is confirmed by people, and if potatoes with abnormalities are mixed in among the others, these potatoes are removed from the manufacturing line. Potatoes that have left the inspection table 3 are carried to the slicer 4.

The slicer 4 slices potatoes with the skin peeled off to a certain thickness while using water to wash away starchiness on the potato surface. The sliced potatoes are carried to the blancher 5.

While using water to wash away sugars on the surfaces of the sliced potatoes, the blancher 5 carries the potatoes to the fryer 6.

The fryer 6 has a tank of oil for deep-frying the sliced potatoes. The amount of oil in the tank is kept within a certain range by automatic control of a valve in a separate tank filled with oil for replenishing. Fried potatoes are carried to the flavoring device 7.

The flavoring device 7 flavors the fried potatoes with seasoning powder. The flavoring device 7 has a tank of seasoning powder, and a suitable amount of the seasoning powder is added to the fried potatoes by automatic control of a valve. Consequently, the flavor of the potato chips is kept to a certain quality. Potato chips that have left the flavoring device 7 are carried to the fastback 8.

The fastback 8 carries the potato chips to an area above the combination weighing machine 10. The potato chips are dropped from a terminal end of the fastback 8 and loaded into the combination weighing machine 10.

The combination weighing machine 10 continuously receives potato chips, performs combination weighing of the potato chips, and supplies the potato chips at a predetermined weight at a time to the bag-making and packaging machine 20.

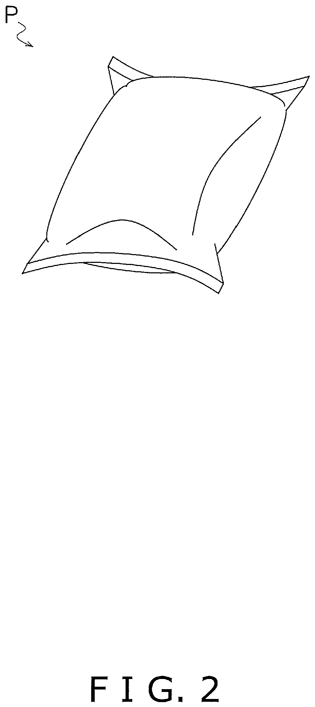

The bag-making and packaging machine 20 is a device that bags supplied commodities C (the potato chips in this case) at a predetermined weight at a time to create a product P such as that shown in FIG. 2, and sends the product P to a device downstream (the boxing device 40 in this case). The product P is the commodities C (potato chips) packaged in a film 201. The product P has sealed parts formed in an upper side and lower side of the product P.

The boxing device 40 packs products P into a cardboard box B (packaging box) at a predetermined numerical quantity at a time, the packed cardboard box B is sealed, and the sealed cardboard box B is carried to the weight checker 50.

The weight checker 50 inspects the appropriateness of the weight of the sealed cardboard box B. A cardboard box B that passes the weight inspection is designated to be shipped.

### (2) Management computer 80

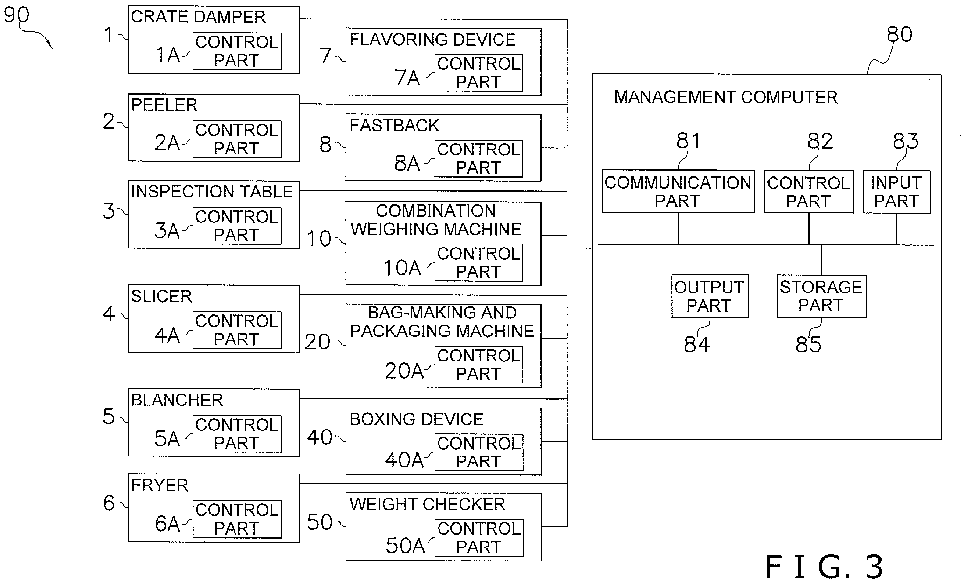

A management computer 80 configured to control the actions of the devices 1 to 8, 10, 20, 40, and 50 is installed in the product production line 100. FIG. 3 is a block diagram schematically depicting a configurational aspect of the management computer 80, and other equipment connected to the management computer 80. The management computer 80 is a general-purpose computer having a communication part 81, a control part 82, an input part 83, an output part 84, and a storage part 85, as shown in FIG. 3.

The communication part 81 is an interface to connect the management computer 80 to a network. The control part 82 is configured from a CPU, a ROM, a RAM, etc. The control part 82 controls the actions of the management computer 80 by reading and executing programs in the storage part 85. The input part 83 is configured from a mouse, a keyboard, or the like. The output part 84 is configured from a liquid crystal display, a speaker, or the like. The storage part 85 is configured from a hard disk, or the like. The storage part 85 stores programs for controlling the actions of the management computer 80, and a variety of information needed for processing.

The management computer 80 is electrically connected via the network to respective microcomputers (specifically, a control part 1A of the crate damper 1, a control part 2A of the peeler 2, a control part 3A of the inspection table 3, a control part 4A of the slicer 4, a control part 5A of the blancher 5, a control part 6A of the fryer 6, a control part 7A of the flavoring device 7, a control part 8A of the fastback 8, a control part 10A of the combination weighing machine 10, a control part 20A of the bag-making and packaging machine 20, a control part 40A of the boxing device 40, and a control part 50A of the weight checker 50) included in the devices. The management computer 80 monitors and controls the actions of the devices 1 to 8, 10, 20, 40, and 50.

### (3) Summary of devices included in product production line 100

### (3-1) Combination weighing machine 10

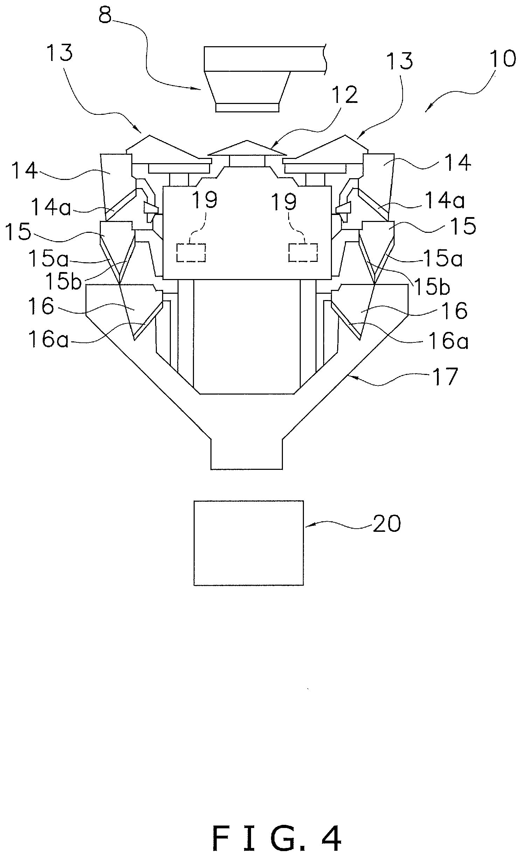

FIG. 4 is a schematic view of the general configuration of the combination weighing machine 10. As shown in FIG. 4, the combination weighing machine 10 includes a scattering table 12, a plurality of supply feeders 13 arranged in a circle around the periphery of the scattering table 12, a plurality of pool hoppers 14 arranged below the supply feeders 13, a plurality of weighing hoppers 15 arranged below the pool hoppers 14, a plurality of booster hoppers 16 arranged below the weighing hoppers 15, a gathering and discharging chute 17 arranged below the booster hoppers 16, a plurality of load cells 19 to measure the weight of the potato chips accumulated in the weighing hoppers 15, and a control part 10A to control the actions of the combination weighing machine 10. The supply feeders 13, the pool hoppers 14, the weighing hoppers 15, the booster hoppers 16, and the load cells 19 are the same in number.

The scattering table 12 is caused to rotate by a rotation device (not shown). Potato chips that have fallen from the fastback 8 onto the scattering table 12 scatter and fall onto the supply feeders 13 due to the rotation of the scattering table 12.

The supply feeders 13 are caused to vibrate by an electromagnetic vibration device (not shown). The supply feeders 13 receive potato chips from the scattering table 12. The supply feeders 13, by vibrating, cause the received potato chips to move outward and fall into the pool hoppers 14.

The pool hoppers 14 temporarily pool the potato chips falling from the supply feeders 13. Gates 14a to open and close discharge ports in lower parts of the pool hoppers 14 are provided thereto. When the gates 14a open, the potato chips in the pool hoppers 14 fall into the downstream weighing hoppers 15.

The weighing hoppers 15 are arranged directly beneath the gates 14a. The weighing hoppers 15 temporarily accumulate potato chips falling from the pool hoppers 14. First gates 15a and second gates 15b to open and close discharge ports in lower parts of the weighing hoppers 15 are provided thereto. When the first gates 15a open, the potato chips in the weighing hoppers 15 fall into the downstream gathering and discharging chute 17. When the second gates 15b open, the potato chips in the weighing hoppers 15 fall into the downstream booster hoppers 16.

The load cells 19 measure the weight of the potato chips in the weighing hoppers 15.

The booster hoppers 16 are arranged directly beneath the second gates 15b. The booster hoppers 16 temporarily accumulate the weighed potato chips falling from the weighing hoppers 15. Gates 16a to open and close discharge ports in lower parts of the booster hoppers 16 are provided thereto. When the gates 16a open, the potato chips in the booster hoppers 16 fall into the gathering and discharging chute 17.

The gathering and discharging chute 17 guides the potato chips falling from the weighing hoppers 15 or the booster hoppers 16 to the bag-making and packaging machine 20.

The control part 10A stores a current weight value of the potato chips in the weighing hopper 15 in correlation with that weighing hopper 15, and stores a current weight value of the potato chips in the booster hopper 16 in correlation with that booster hopper 16. On the basis of the weight values of the potato chips correlated with the individual weighing hoppers 15 and the individual booster hoppers 16, the control part 10A performs a combination calculation and selects some of hoppers 15 and 16. The combination calculation involves totaling weight values of the potato chips in the individual hoppers 15 and 16 in various combinations, and calculating combinations of hoppers 15 and 16 such that the total values fall within a predetermined range.

As a result of the combination calculation, when a number of hoppers 15 and 16 are selected, the gates 15a and 16a to open and close the discharge ports of the selected hoppers 15 and 16 are opened, and the potato chips in those hoppers 15 and 16 are discharged into the gathering and discharging chute 17. The emptied hoppers 15 and 16 are then sequentially refilled with new potato chips from the hoppers 14 and 15 thereover.

As described above, a predetermined weight of potato chips gathers in the gathering and discharging chute 17. The potato chips that have gathered while sliding down within the gathering and discharging chute 17 are supplied to the bag-making and packaging machine 20, which is arranged directly beneath a discharge port of the gathering and discharging chute 17.

### (3-2) Bag-making and packaging machine 20

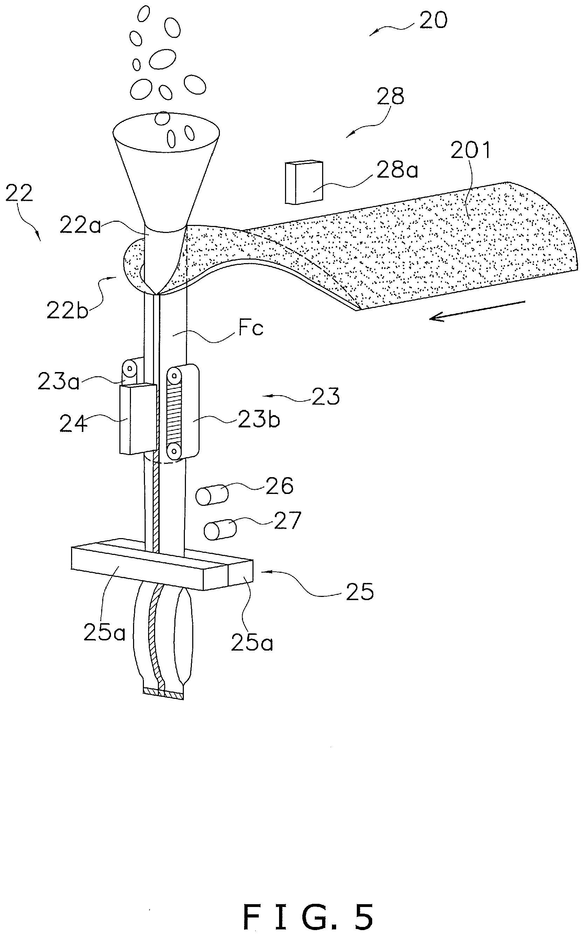

FIG. 5 is a schematic view of the general configuration of the bag-making and packaging machine 20. As shown in FIG. 5, the bag-making and packaging machine 20 includes a film supply mechanism (not shown) having a film roll, a forming mechanism 22 to form a sheet-form film 201 unreeled from the film supply mechanism into a cylindrical shape, a carrying mechanism 23 to downwardly carry the film 201 formed into a cylindrical shape (referred to below as a cylindrical film Fc) by the forming mechanism 22, a vertical sealing mechanism 24 to vertically seal overlapping portions of the cylindrical film Fc, a lateral sealing mechanism 25 to laterally seal portions of the cylindrical film Fc that become upper and lower ends of a bag, an air enclosing mechanism 26 to enclose air into the bag, an inert gas enclosing mechanism 27 to enclose an inert gas into the bag, a printing mechanism 28 to print label information on a portion of the sheet-form film 201 that becomes a label area of the bag, a seal checker (not shown) to determine whether or not the bag is hermetically sealed, and the control part 20A to control the actions of the bag-making and packaging machine 20.

The forming mechanism 22 has a tube 22a and a former 22b. The tube 22a is a cylindrical member, made to extend in the vertical direction, open at upper and lower ends, and fixed to the former 22b. Potato chips falling in a predetermined weight at a time from the combination weighing machine 10 are loaded into the upper-end opening of the tube 22a. The former 22b is arranged so as to encircle the upper-end area of the tube 22a. The sheet-form film 201 being sent from the film supply mechanism is wrapped around an outer surface of the tube 22a while passing through a gap between the former 22b and the tube 22a, and is formed into a cylindrical shape.

The carrying mechanism 23 has a pair of pull-down belts 23a and 23b. The pull-down belts 23a and 23b are bilaterally symmetric about the tube 22a as a reference. The pull-down belts 23a and 23b come into contact with the cylindrical film Fc wrapped around the tube 22a and carry the cylindrical film Fc downward while suction-holding the film.

The vertical sealing mechanism 24 is arranged so as to extend in the vertical direction along the tube 22a. The vertical sealing mechanism 24 has a heater and a seal surface heated by the heater. The vertical sealing mechanism 24 thermally seals vertically extending, overlapping portions of the cylindrical film Fc wrapped around the tube 22a, while pushing these portions against the outer surface of the tube 22a at a certain pressing force through the seal surface.

The lateral sealing mechanism 25 is arranged below the tube 22a. The lateral sealing mechanism 25 has a pair of seal jaws 25a. The seal jaws 25a each have a heater and a seal surface heated by the heater. While pivoting at the proper timing, the seal jaws 25a move in a horizontal direction so as to move toward and away from each other, and perform an action of sandwiching the cylindrical film Fc through the seal surfaces. The portion of the cylindrical film Fc sandwiched by the seal surfaces is thermally sealed along the lateral direction. At the same time, the laterally sealed portion is cut along the lateral direction by a cutter (not shown) housed within one seal jaw 25a, and the preceding bag and following bag are cut apart. Additionally, at the timing at which the lateral seal is made, clumps of potato chips fall from the combination weighing machine 10 through the tube 22a.

The air enclosing mechanism 26 is arranged in proximity to the lateral sealing mechanism 25. The air enclosing mechanism 26 seals air within the cylindrical film Fc immediately before the cylindrical film Fc is laterally sealed, in order to maintain a certain amount of swelling in the bag sealed by the lateral seal.

The inert gas enclosing mechanism 27 is disposed in proximity to the lateral sealing mechanism 25. The inert gas enclosing mechanism 27 seals an inert gas (nitrogen gas) within the cylindrical film Fc immediately before the cylindrical film Fc is laterally sealed, in order to prevent degradation of the potato chips in the bag sealed by the lateral seal.

The printing mechanism 28 is arranged near a location where the film 201 is carried in planar fashion between the film supply mechanism and the forming mechanism 22. The printing mechanism 28 has a print head 28a. The print head 28a moves back and forth between a basic position of maintaining a certain distance from the film 201, and a printing position of coming into contact with the film 201. When in the printing position, the print head 28a prints label information on the film 201. The timing of the back-and-forth movement of the print head 28a is controlled by the control part 20A so that the print head 28a, when in the printing position, reliably comes into contact with the portion of the film 201 that will be the label area of the bag.

The seal checker inspects the appropriateness of the sealed state of a bag of products P. Specifically, the seal checker applies pressure to a carried bag of products P along a thickness direction of the bag, detects the thickness of the bag during pressure application, and on the basis of the thickness, determines whether or not the bag is hermetically sealed. Products P that have left the seal checker are sorted into satisfactory products and unsatisfactory products by a sorting mechanism (not shown) in accordance with the result of the inspection made by the seal checker. Satisfactory products are sent to the boxing device 40 of the next step, and unsatisfactory products are sent to an unsatisfactory product recovery conveyor (not shown).

### (3-3) Boxing device 40

The boxing device 40 sequentially receives products P discharged from the bag-making and packaging machine 20 (i.e., products P that have passed the inspection made by the seal checker), and aligns a predetermined number of products P into a group of products (a product group G). The boxing device 40 also makes a box from a sheet member for box-making, and manufactures a cardboard box B. The boxing device 40 packs product groups G into the manufactured cardboard box B in a predetermined number of tiers. Then, the boxing device 40 seals a fully packed cardboard box B. And after, The boxing device 40 sends the box to a downstream device (the weight checker 50 in this case).

The term "tier" used here refers to a layer stacked within the cardboard box B. The numerical quantity of products P included in one "tier" is referred to below as a "tier-configuring product number DV," and the number of tiers packed into one cardboard box B is referred to as a "packed tier number FV." In the present embodiment, the "tier-configuring product number DV" is set to four (products), and the packed tier number FV is set to three (tiers). The value of one tier-configuring product number DV and the value of the packed tier number FV can be changed as appropriate, in accordance with the installation environment and/or design specifications.

The details of the boxing device 40 are described in the section "(4) Details of boxing device 40" below.

### (3-4) weight checker 50

The weight checker 50 includes a carrying conveyor 51, a load cell (not shown), and a control part 50A to control the actions of the weight checker 50.

The carrying conveyor 51 links the boxing device 40 and the sorting mechanism (not shown) together. The load cell measures the weight of the cardboard box B being carried in on the carrying conveyor 51.

On the basis of an output signal of the load cell, the control part 50A determines whether or not the weight of the cardboard box B stays within a predetermined range. When the weight is determined to be outside of the predetermined range, the control part 50A transmits an unsatisfactory signal to that effect to the downstream sorting mechanism (not shown). The sorting mechanism sorts unsatisfactory boxes to an unsatisfactory box recovery conveyor (not shown) in accordance with an unsatisfactory signal from the weight checker 50.

### (4) Details of boxing device 40

The details of the boxing device 40 are described below. In the description below, the term "carrying direction" means a direction x in which a box-making sheet FB or a cardboard box B is transferred in the boxing device 40, and the term "upstream" or "downstream" means upstream or downstream along the carrying direction x.

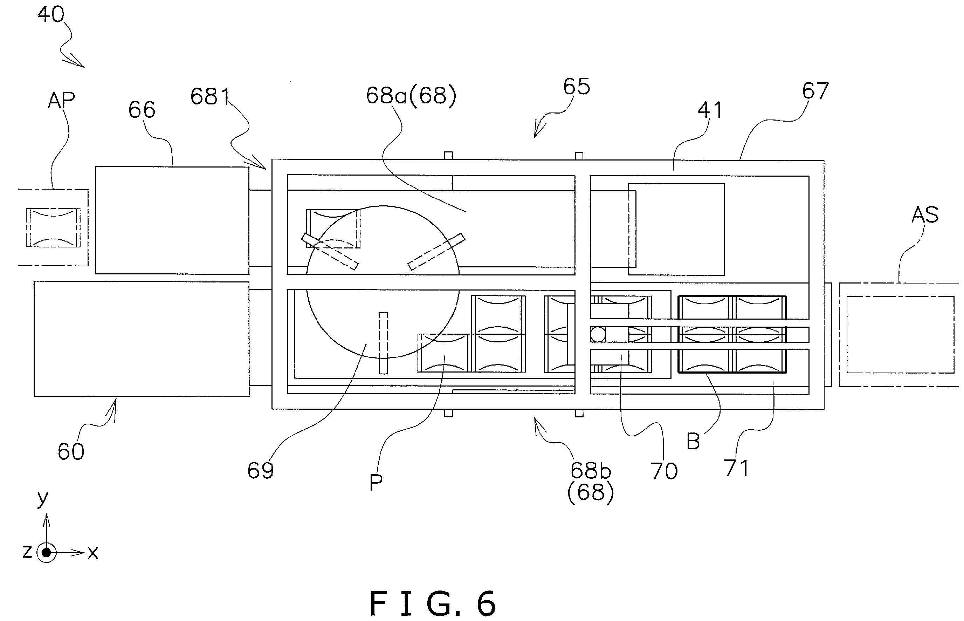

FIG. 6 is a schematic view showing the boxing device 40 in planar fashion. The boxing device 40 has, inside a frame 41 configuring the contours, a box-making section 60 to make the cardboard boxes B, and a boxing section 65 to pack products P into a made cardboard box B. The actions of the sections included in the boxing device 40 are directly controlled by the control part 40A.

The box-making-related action performed by the box-making section 60 is referred to as the " box-making action," and the boxing-related action performed by the boxing section 65 is referred to as the "boxing action."

### (4-1) Box-making section 60

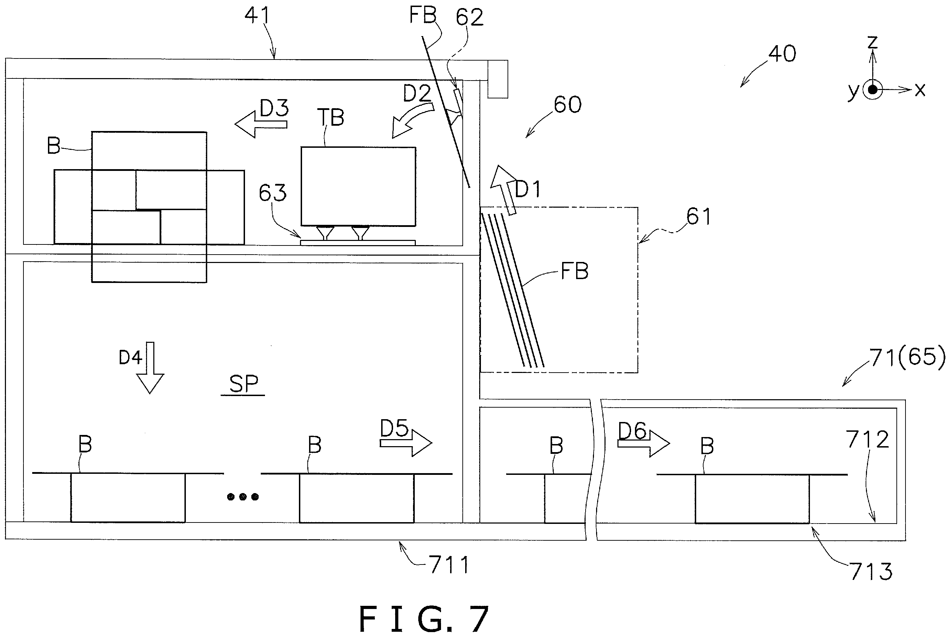

FIG. 7 is a schematic view roughly showing part of a configurational aspect of the box-making section 60 and the boxing section 65.

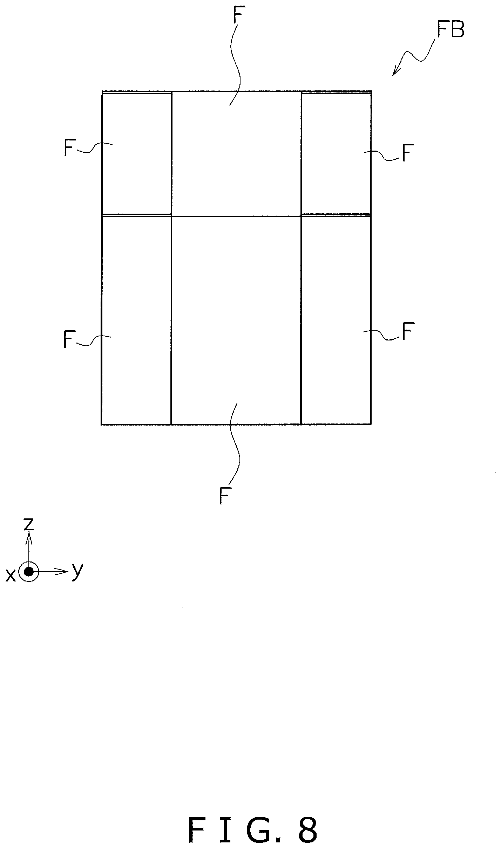

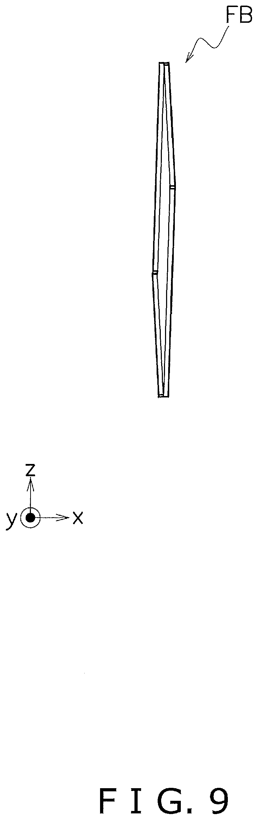

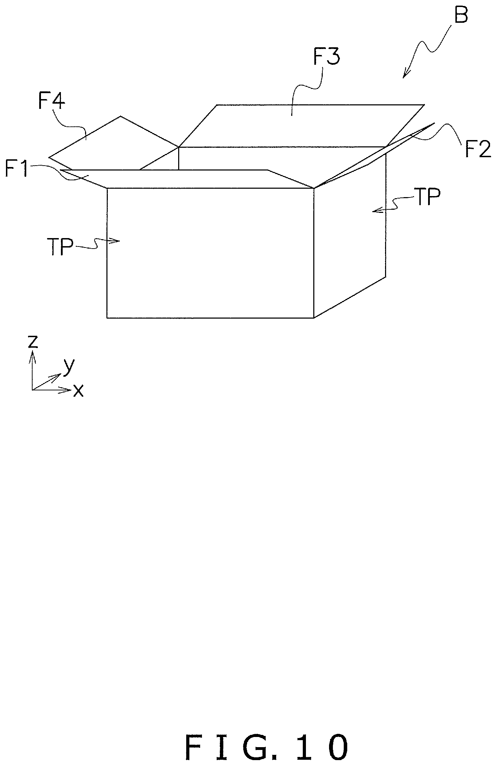

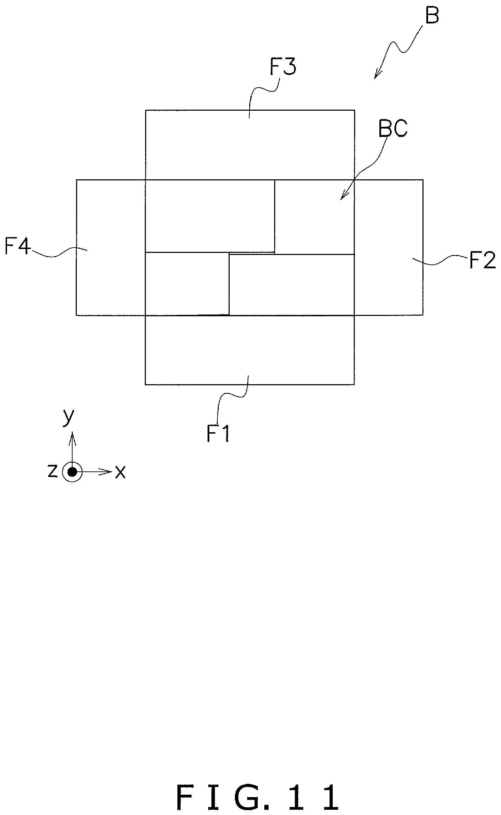

The box-making section 60 unfolds a box-making sheet FB, which includes a plurality of flaps F, such as is shown in FIGS. 8 and 9, and makes a cardboard box B such as is shown in FIGS. 10 and 11. More specifically, the box-making section 60, by folding in a cardboard box B so that the plurality of flaps F of the box-making sheet FB overlaps, makes a cardboard box B including side surfaces TP, a bottom cover BC, and flaps F1 to F4. The box-making section 60 mainly includes a sheet-stacking mechanism 61, a transferring mechanism 62, and a box-making mechanism 63.

The sheet-stacking mechanism 61 stacks a large number of box-making sheets FB. In the transferring mechanism 62, one box-making sheet FB, from among the plurality of box-making sheets FB stacked on the sheet-stacking mechanism 61, is pulled away from the trailing box-making sheet FB by a suction disk, and is transferred upward and delivered to the box-making mechanism 63 (see arrow D1 in FIG. 7).

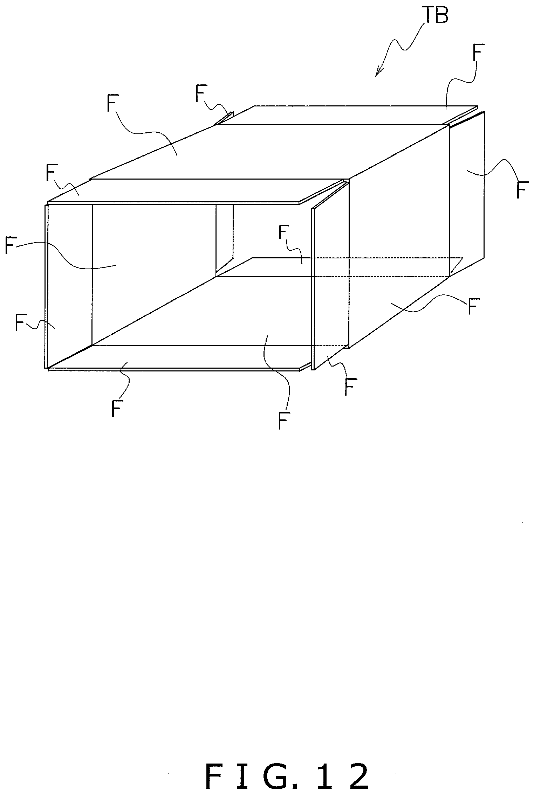

The box-making mechanism 63 unfolds the delivered box-making sheet FB and forms a square tube TB such as is shown in FIG. 12. In other words, the box-making mechanism 63 deforms the box-making sheet FB received from the transferring mechanism 62 from a flat surface shape to a cylindrical shape (see arrow D2 in FIG. 7). The box-making mechanism 63 shapes the cardboard box B by creating a bottom cover BC in the square tube TB (see arrow D3 in FIG. 7). The box-making mechanism 63 affixes adhesive tape for maintaining the shape of the cardboard box B to the bottom cover BC, and causes the cardboard box B to move downward. A lowering start position is a location where the cardboard box B is carried downward.

The cardboard box B then moves (falls) to a stocking section 711 (stocking space SP) of the boxing section 65 formed below the lowering start position (see arrow D4 in FIG. 7).

### (4-2) Boxing section 65 (boxing mechanism)

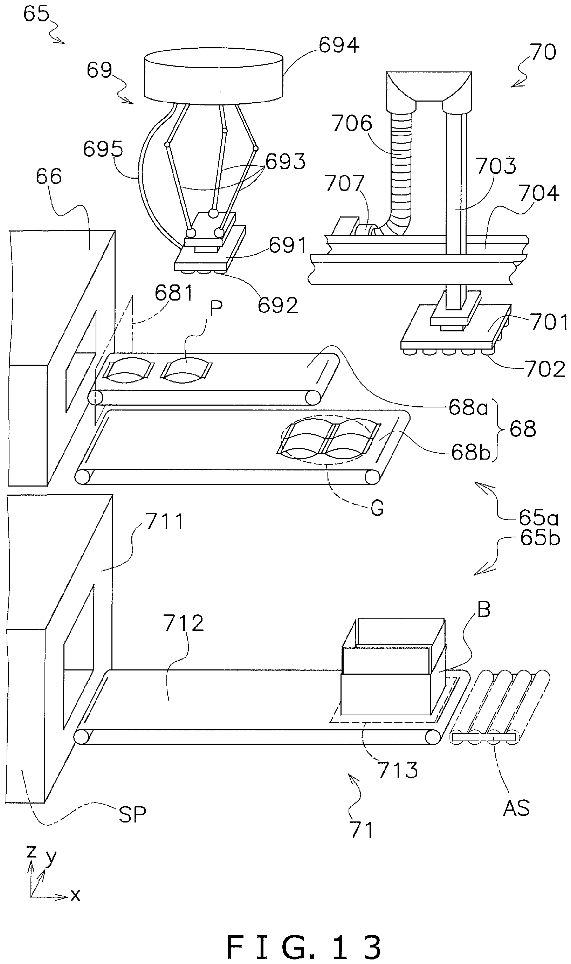

FIG. 13 is a schematic view roughly showing a configurational aspect of the boxing section 65. The boxing section 65 is a unit for aligning a plurality of products P carried from an early-stage device conveyor AP, packing the products into cardboard boxes B, and delivering the boxes to a later-stage device conveyor AS.

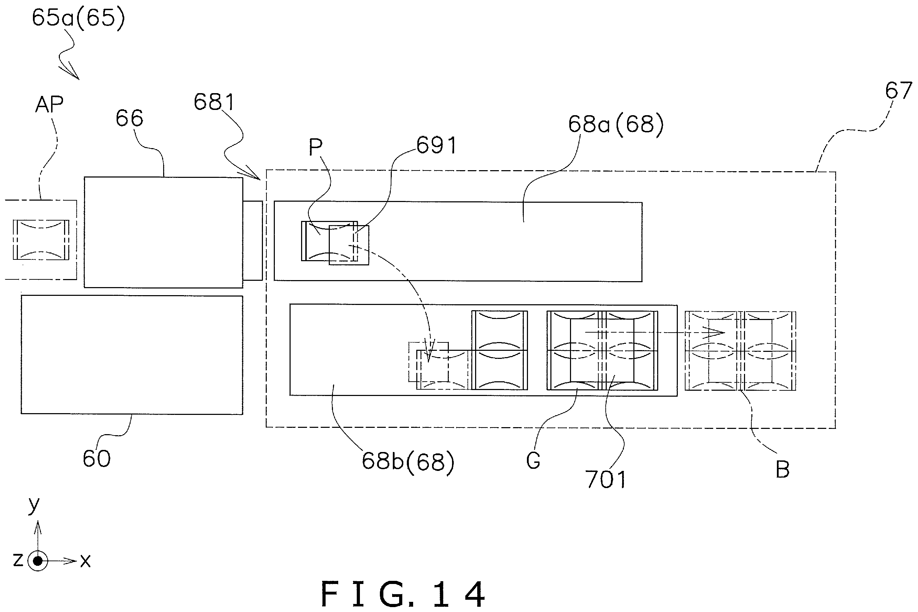

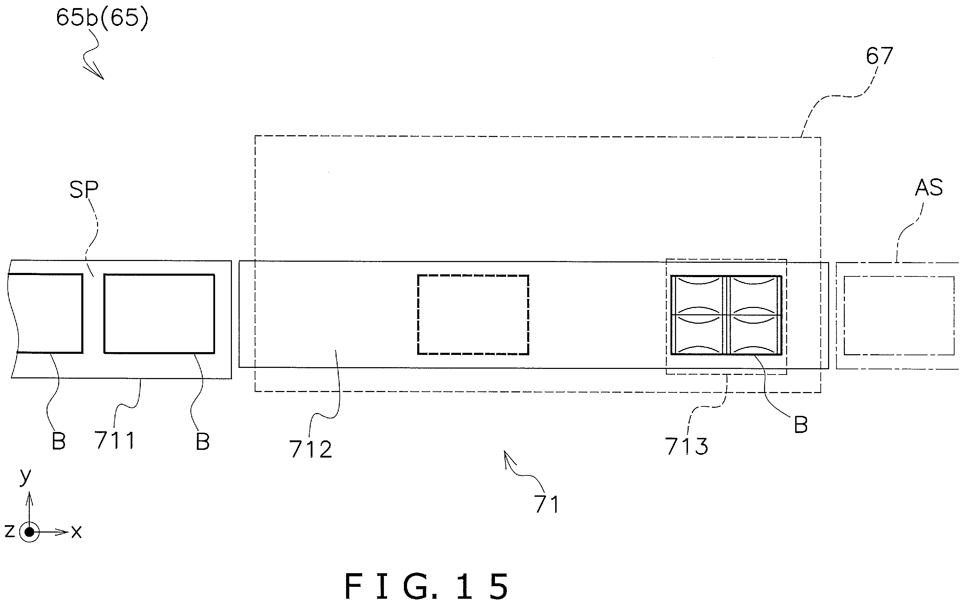

The boxing section 65 is configured within the frame 41, which has a two-tier structure. FIG. 14 is a schematic view showing, in planar fashion, the portion (boxing section first unit 65a) configured in a two-tier portion in the boxing section 65. FIG. 15 is a schematic view showing, in planar fashion, the portion (boxing section second unit 65b) configured in a one-tier portion in the boxing section 65.

The boxing section 65 has a product inspection section 66 and a product arrangement section 67.

### (4-2-1) Product inspection section 66

The product inspection section 66 is provided in proximity to an upstream end of the boxing section 65. The product inspection section 66 is provided to the boxing section first unit 65a (two-tier portion).

The product inspection section 66 is a unit for inspecting weight, the state of the affixed seal, the presence/absence of foreign substance infiltration, etc., in products P carried by the early-stage device conveyor AP. A signal representing the inspection result sent by the product inspection section 66 is transmitted via a signal line (not shown) and received by the product arrangement section 67. The product inspection section 66 delivers inspected products P to the product arrangement section 67.

### (4-2-2) Product arrangement section 67

The product arrangement section 67 includes a product conveyor 68, a product-accumulating mechanism 69, a product group movement mechanism 70, and a box-handling section 71. As shown in FIG. 15, the product conveyor 68, the product-accumulating mechanism 69, and the product group movement mechanism 70 are provided to the boxing section first unit 65a (two-tier portion), and the box-handling section 71 is arranged in the boxing section second unit 65b (one-tier portion).

### (4-2-2-1) Product conveyor 68

The product conveyor 68 is a unit for carrying the products P in the carrying direction x. The product conveyor 68 includes a product-carrying conveyor 68a and a product-accumulating conveyor 68b. The product-accumulating conveyor 68b is arranged parallel with the product-carrying conveyor 68a.

The products P discharged from the product inspection section 66 enter the product arrangement section 67 through a product entrance 681, and the products P are placed on the product-carrying conveyor 68a.

### (4-2-2-2) Product-accumulating mechanism 69

The product-accumulating mechanism 69 is a mechanism for accumulating a plurality of products P and creating a product group G in cooperation with the product conveyor 68. Specifically, the product-accumulating mechanism 69 lifts up one product P at a time placed on the product-carrying conveyor 68a, and accumulates the products on the product-accumulating conveyor 68b.

FIG. 13 shows an aspect of accumulating a two-dimensionally aligned product group G. The product-accumulating mechanism 69 can, as an alternative, create a product group G by accumulating products P in an aspect of partially overlapping and being aligned in one row, or in various other aspects.

The product-accumulating mechanism 69 is configured from, for example, a parallel link robot, and is fixed to the frame 41. The product-accumulating mechanism 69 includes an accumulating head 691, a plurality of accumulating suction-holding tools 692, three arms 693, a servo mechanism 694, and a suction tube 695.

The servo mechanism 694, through the use of the arms 693, three-dimensionally moves or rotates the accumulating head 691. The plurality of accumulating suction-holding tools 692 are provided to the accumulating head 691. The suction tube 695 causes internal spaces of the accumulating suction-holding tools 692 to communicate with a vacuum pump (not shown). The vacuum pump suctions air when the accumulating suction-holding tools 692 adhere firm to a product P, whereby the accumulating head 691 can lift up one product P.

### (4-2-2-3) Product group movement mechanism 70

The product group movement mechanism 70 is a mechanism for lifting up and packing a product group G into the cardboard box B.

The product group movement mechanism 70 is configured from a robot and is fixed to the frame 41. The product group movement mechanism 70 includes a packing head 701, packing suction-holding tools 702, a mast 703, a movement guide 704, a flexible hose 706, and a pump suction port 707.

The movement guide 704 has a motor (not shown) and can move the mast 703 in an x-axis direction or a z-axis direction. Specifically, the packing head 701 provided to a tip of the mast 703 can move in an xz plane. The packing head 701, which is larger than the accumulating head 691, is provided with a large number of packing suction-holding tools 702, and can lift up all at once a plurality of products P configuring a product group G.

Internal spaces of the packing suction-holding tools 702 communicate with a vacuum pump (not shown) through the interior of the mast 703, the flexible hose 706, and the pump suction port 707. The vacuum pump suctions air when the packing suction-holding tools 702 adhere firm to the product group G, whereby the packing head 701 can collectively lift up the product group G all at once.

### (4-2-2-4) Box-handling section 71

The box-handling section 71 is a unit for preserving or moving the cardboard box B in connection with the boxing action. The box-handling section 71 has the stocking section 711, a box-carrying conveyor 712, and a packing section 713.

The stocking section 711 is configured from the frame 41. A stocking space SP being formed inside the stocking section 711. In the stocking section 711, a stocking space SP that is large enough to stock (hold) a plurality of cardboard boxes B is formed. In the present embodiment, the stocking space SP is formed to a size in which a maximum of five cardboard boxes B can be stocked. The size of the stocking space SP (i.e., the numerical quantity of cardboard boxes B that can be stocked in the stocking space SP) can be changed as appropriate in accordance with the installation environment and/or design specifications.

The box-carrying conveyor 712 carries the cardboard boxes B in the stocking space SP to the packing section 713 at a predetermined timing, on the basis of the action situation of the boxing section first unit 65a (two-tier portion).

The packing section 713 is a portion on which are placed cardboard boxes B that are sent from the stocking space SP and that are to undergo the boxing action. Specifically, the packing section 713 is a portion on the surface of the box-carrying conveyor 712 that is nearer the downstream end than the product-accumulating conveyor 68b and that is positioned below the product group movement mechanism 70.

In the boxing action, a product group G is packed all at once by the product group movement mechanism 70 into a cardboard box B placed on the packing section 713. The packing of one cardboard box B is repeated a predetermined number of times in the boxing action. Having undergone the boxing action, the cardboard box B is then sent by the box-carrying conveyor 712 to the later-stage device conveyor AS. Additionally, when the next boxing action is performed, the box-carrying conveyor 712 sends a cardboard box B stocked in the stocking space SP to the packing section 713 (see arrows D5 and D6 in FIG. 7).

### (4-3) Action of boxing device 40

The boxing device 40 performs the box-making action for cardboard boxes B in the box-making section 60. In the box-making action, one box-making sheet FB at a time is delivered from the sheet-stacking mechanism 61 to the box-making mechanism 63, a cardboard box B is shaped by the box-making mechanism 63, and the shaped cardboard box B is sent to the stocking section 711. The cardboard box B sent to the stocking section 711 is stocked in the stocking space SP (specifically, the box is held in standby with the upper part kept open). The numerical quantity (stocking number SV) of cardboard boxes B stocked in the stocking space SP is decided according to the situation by a controller 90 (described hereinafter).

The boxing device 40 performs inspections in the product inspection section 66 on products P carried one at a time from the early-stage device conveyor AP. The boxing device 40 sends products P that have completed the inspection to the product arrangement section 67. The boxing device 40 performs the boxing action, in which a predetermined numerical quantity of products P that have completed the inspection are packed into a cardboard box B, in the product arrangement section 67.

In association with the boxing action, the boxing device 40 causes the products P to be carried one at a time by the product-carrying conveyor 68a, and causes the products P to be accumulated on the product-accumulating conveyor 68b and aligned as a product group G by the product-accumulating mechanism 69. The boxing device 40, through the box-carrying conveyor 712, sends a cardboard box B stocked in the stocking space SP to the packing section 713. The boxing device 40, through the product group movement mechanism 70, lifts up the product group G all at once and packs the product group G into the cardboard box B placed on the packing section 713. At this time, the related packing is repeated according to the number of tiers (packed tier number FV) of products P packed into the cardboard box B, which has been set in advance.

The boxing device 40 then, through the box-carrying conveyor 712, sends the cardboard box B, in which the predetermined numerical quantity (packed tier number FV * tier-configuring product number DV) of products P has been packed, to the later-stage device conveyor AS. When performing the next boxing action with the supplied products P, the boxing device 40, through the box-carrying conveyor 712, sends the cardboard box B stocked in the stocking space SP to the packing section 713.

### (5) Controller 90

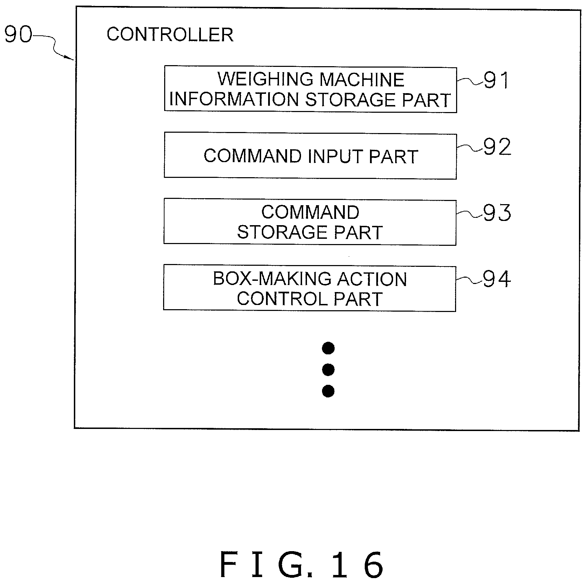

As shown in FIG. 3, in the present embodiment, the management computer 80 and the control parts (1A, 2A, 3A, 4A, 5A, 6A, 7A, 8A, 10A, 20A, 40A, and 50A) of the devices are electrically connected, thereby configuring the controller 90 to collectively control the actions of the product production line 100. FIG. 16 is a block diagram showing some of the functional parts actualized in the controller 90. A plurality of functional parts, including a weighing machine information storage part 91, a command input part 92, a command storage part 93, and a box-making action control part 94, are configured in the controller 90, as shown in FIG. 16.

### (5-1) Weighing machine information storage part 91

In the weighing machine information storage part 91, information (weighing machine information) pertaining to the weight of the commodities C in the combination weighing machine 10 is stored. The weighing machine information is, for example, information specifying a weight value of commodities C supplied to the scattering table 12, or information individually specifying weight values of commodities C (potato chips in this case) in the weighing hoppers 15. Specifically, the weighing machine information is information specifying the weight value of commodities C supplied into the combination weighing machine 10, which is a device upstream of the boxing device 40. The weighing machine information stored in the weighing machine information storage part 91 is updated in real time by the control part 10A of the combination weighing machine 10.

The weight of the commodities C (potato chips) packaged in the products P is set in advance by a user; therefore, pertaining to the commodities C supplied in the combination weighing machine 10, the number of products P sent from the bag-making and packaging machine 20 to the boxing device 40 can be specified on the basis of the weighing machine information. Specifically, the weighing machine information is equivalent to "packaging-machine-related information" which is related to the operating situation of the bag-making and packaging machine 20.

### (5-2) Command input part 92

The command input part 92 is an interface to receive commands from the user through, for example, the input part 83 in the management computer 80, or another component. The command input part 92 stores inputted commands in a predetermined storage area of the command storage part 93.

### (5-3) Command storage part 93

The command storage part 93 is a storage area to separately store commands inputted to the command input part 92. Examples of the commands stored in the command storage part 93 include a command relating to the setting of the stocking number SV of cardboard boxes B in the stocking space SP (for example, a command relating to the setting of a hereinafter-described normal stocked numerical quantity PV, minimum stocked numerical quantity MV, set numerical quantity CV, or the like). Another example is a command relating to the switching of a control mode in the box-making action control part 94 (for example, a hereinafter-described small-quantity mode selection command, automatic adjustment mode selection command, etc.).

### (5-4) Box-making action control part 94

The box-making action control part 94 is a functional part to collectively control the box-making action in the boxing device 40 through the control part 40A. More specifically, the box-making action control part 94 executes a stocking number deciding process to decide the numerical quantity (stocking number SV) of cardboard boxes B stocked in the stocking space SP, in accordance with the situation. The box-making action control part 94 sends a signal to the box-making section 60 and, at a predetermined timing corresponding to the process speed of the boxing action, either causes the box-making action to be performed or causes the box-making action to be stopped so that a numerical quantity of cardboard boxes B, equivalent to the stocking number SV decided by the stocking number deciding process, is stocked in the stocking space SP. Specifically, the box-making action control part 94 causes the box-making section 60 to make cardboard boxes B in a numerical quantity based on the stocking number SV decided by the stocking number deciding process.

The box-making action control part 94 has a plurality of control modes pertaining to the box-making action in the box-making section 60 associated with the stocking number SV of cardboard boxes B in the stocking space SP. These control modes include a normal mode, a small-quantity mode, and an automatic adjustment mode. The box-making action control part 94 transitions to the normal mode as a basis. The box-making action control part 94 transitions to the small-quantity mode when a predetermined command (a small-quantity mode selection command) is inputted by the user. The box-making action control part 94 transitions to the automatic adjustment mode when another predetermined command (an automatic adjustment mode selection command) is inputted by the user.

Specifically, during the normal mode (equivalent to the "first control mode" in the claims), the box-making action control part 94 executes the stocking number deciding process (first stocking number deciding process) to decide the stocking number SV quantity as the numerical quantity (normal stocked numerical quantity PV) set in advance by the user. Specifically, during the normal mode, the box-making action control part 94 executes the stocking number deciding process (first stocking number deciding process) on the basis of the normal stocked numerical quantity PV set by the user (user-set information). During the normal mode, the normal stocked numerical quantity PV of cardboard boxes B is stocked in the stocking space SP. The normal stocked numerical quantity PV is set to, for example, five (boxes), but no particular limitation is provided thereby, and the user can set a desired value as appropriate.

During the small-quantity mode (equivalent to the "first control mode" in the claims), the box-making action control part 94 executes the stocking number deciding process (second stocking number deciding process) to decide the stocking number SV to be the numerical quantity (minimum stocked numerical quantity MV) set in advance by the user as the stocking number SV during the small-quantity mode.

Specifically, during the small-quantity mode, the box-making action control part 94 executes a stocking number deciding process (second stocking number deciding process) on the basis of the minimum stocked numerical quantity MV set by the user (user-set information). During the small-quantity mode, the minimum stocked numerical quantity MV of cardboard boxes B is stocked in the stocking space SP. The minimum stocked numerical quantity MV is set to, for example, one (box), but no particular limitation is provided thereby, and the user can set a desired value as appropriate.

The automatic adjustment mode (equivalent to the "second control mode" in the claims) is a control mode to adjust the stocking number SV in real time so that the number of cardboard boxes B stocked in the stocking space SP will be zero (boxes) (i.e., so that there will be no extra cardboard boxes B), when the type of products P produced in the product production line 100 is changed, or when production of the products P is ended. In the automatic adjustment mode, the box-making action control part 94 executes the stocking number deciding process (a third stocking number deciding process) to decide, in real time, the stocking number SV of cardboard boxes B in the stocking space SP, on the basis of information relating to the operating situation of a device located in an earlier stage (for example, the combination weighing machine 10 or the bag-making and packaging machine 20).

In the present embodiment, the box-making action control part 94 decides the stocking number SV in the third stocking number deciding process, on the basis of the weighing machine information stored in the weighing machine information storage part 91. Specifically, concerning the third stocking number deciding process, the box-making action control part 94 refers to the weighing machine information at each elapse of a predetermined time t1, and from the related weighing machine information, calculates (estimates) the numerical quantity of products P (a remaining product number RV) discharged from the bag-making and packaging machine 20. When the calculated remaining product number RV is equal to or greater than a predetermined threshold value (a first threshold value ΔTh1), the box-making action control part 94 decides the stocking number SV to be the set numerical quantity CV, which has been set in advance.

The set numerical quantity CV is set to, for example, five (boxes), but a limitation is not necessarily provided by this value; changes can be made as appropriate in accordance with the installation environment and/or the design specifications. The aforementioned predetermined time t1 is set to, for example, 1 (second), but a limitation is not necessarily provided by this value, and the desired value can be set. The first threshold value ΔTh1 is set to, for example, 60 (products) on the basis of the packed tier number FV and the tier-configuring product number DV, but no limitation is provided thereby and changes can be made as appropriate in accordance with the installation environment and/or the design specifications.

When the calculated remaining product number RV is less than the first threshold value ΔTh1 (in other words, when it is assumed that the remaining numerical quantity of products P to undergo the boxing action is less than the first threshold value ΔTh1), the box-making action control part 94 decides the numerical quantity of cardboard boxes B needed in the boxing action to be the stocking number SV, on the basis of the remaining product number RV and the numerical quantity of products packed into the cardboard box B (the packed tier number FV and the tier-configuring product number DV).

In the present embodiment, the stocking number SV is calculated by dividing the remaining product number RV by the product of the packed tier number FV and the tier-configuring product number DV. Specifically, when the calculated remaining product number RV is less than the first threshold value ΔTh1, the stocking number SV is calculated by a calculation formula "RV/(FV^{∗}DV)" (this calculation rounds up numerals past the decimal point). Thus, when the remaining product number RV is less than the first threshold value ΔTh1 in the third stocking number deciding process, the stocking number SV is calculated as appropriate by a predetermined calculation formula. When the stocking number SV reaches zero (boxes), the box-making action control part 94 outputs a stop signal (a signal instructing to stop the box-making action) to the box-making section 60. With this signal, the box-making action is stopped in the box-making section 60.

Due to these actions, in the automatic adjustment mode, when the quantity of commodities C supplied to the combination weighing machine 10 (i.e., the numerical quantity of products P sent from the bag-making and packaging machine 20) is large, the stocking number SV of cardboard boxes B equivalent to the set numerical quantity CV is stocked in the stocking space SP, and the stocking number SV is adjusted to the necessary minimum limit as the quantity of commodities C supplied to the combination weighing machine 10 decreases.

### (6) Flow of stocking number deciding process

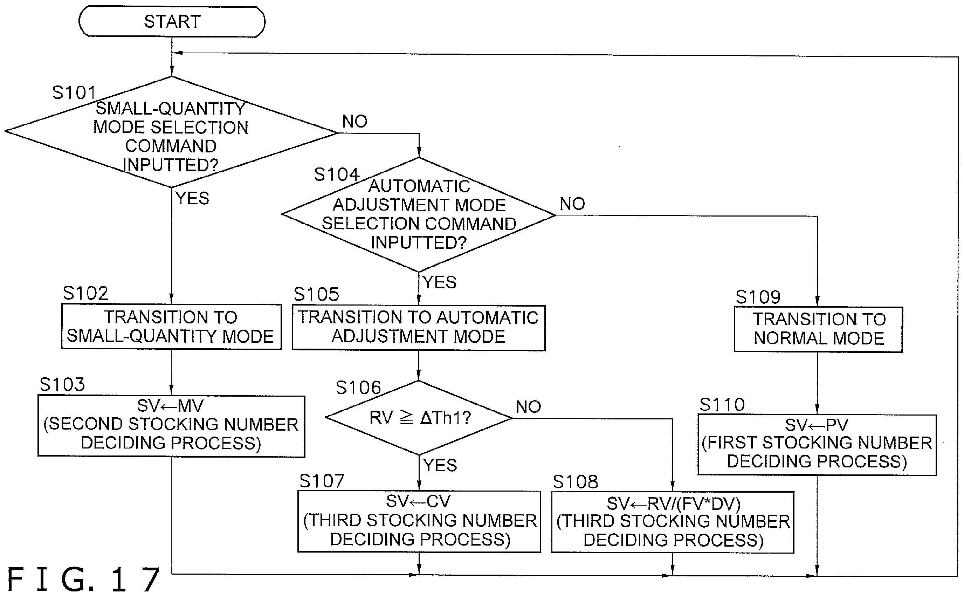

The following is a description, made with reference to FIG. 17, of the flow of the stocking number deciding process. FIG. 17 is a flowchart showing an example of the flow of the stocking number deciding process. The following steps S101 to S110 are merely one example, and changes can be made as appropriate in accordance with the design specifications.

In step S101, the controller 90 (the box-making action control part 94) proceeds to step S104 when the small-quantity mode selection command has not been inputted (i.e., in the case of NO). When the small-quantity mode selection command has been inputted (i.e., in the case of YES), the controller 90 proceeds to step S102.

In step S102, the controller 90 transitions to the small-quantity mode in accordance with the small-quantity mode selection command having been inputted. The controller 90 then proceeds to step S103.

In step S103, the controller 90 executes the stocking number deciding process (the second stocking number deciding process) to decide the stocking number SV as the minimum stocked numerical quantity MV (e.g., one box). The minimum stocked numerical quantity MV of cardboard boxes B are thereby stocked in the stocking space SP. The controller 90 then returns to step S101.

In step S104, when the automatic adjustment mode selection command has not been inputted (i.e., in the case of NO), the controller 90 proceeds to step S109. When the automatic adjustment mode selection command has been inputted (i.e., in the case of YES), the controller 90 proceeds to step S105.

In step S105, the controller 90 transitions to the automatic adjustment mode in accordance with the automatic adjustment mode selection command having been inputted. The controller 90 then proceeds to step S106.

In step S106, the controller 90 calculates (estimates), from the weighing machine information, the numerical quantity of products P (remaining product number RV) discharged from the bag-making and packaging machine 20. The controller 90 proceeds to step S108 when the calculated remaining product number RV is less than the first threshold value ΔTh1 (i.e., in the case of NO). The controller 90 proceeds to step S107 when the calculated remaining product number RV is equal to or greater than the first threshold value ΔTh1 (i.e., in the case of YES).

In step S107, the controller 90 executes the stocking number deciding process (the third stocking number deciding process) to decide the stocking number SV to be the set numerical quantity CV (for example, five boxes) set in advance, in accordance with the calculated remaining product number RV being equal to or greater than the first threshold value ΔTh1 (i.e., the remaining numerical quantity of products P being large). The set numerical quantity CV of cardboard boxes B is thereby stocked in the stocking space SP. The controller 90 then returns to step S101.

In step S108, in accordance with the calculated remaining product number RV being less than the first threshold value ΔTh1 (i.e., the remaining numerical quantity of products P being few), the controller 90 executes the stocking number deciding process (the third stocking number deciding process) to decide that the stocking number SV will be a value calculated (with numerals past the decimal point rounded up) by dividing the remaining product number RV by the product of the packed tier number FV and the tier-configuring product number DV The stocking number SV is thereby adjusted in real time so that the number of cardboard boxes B stocked in the stocking space SP will be zero (boxes) (i.e., so that there will be no extra cardboard boxes B), when the type of products P produced in the product production line 100 is changed, or when production of the products P is ended. The controller 90 then returns to step S101.

In step S109, the controller 90 transitions to the normal mode. The controller 90 then proceeds to step S110.

In step S110, the controller 90 executes the stocking number deciding process (the first stocking number deciding process) to decide the stocking number SV to be the normal stocked numerical quantity PV (for example, five boxes). The normal stocked numerical quantity PV of cardboard boxes B is thereby stocked in the stocking space SP. The controller 90 then returns to step S101.

### (7) Characteristics

### (7-1)

In the above embodiment, decrease in productivity is suppressed and cost increase is suppressed.

Specifically, in a scenario of a prior-art boxing device in which the device is operating and a packaging box for the next boxing step is not being held in standby (i.e., when a packaging box is not stocked), when the box-making machine has stopped (normally stopped or abnormally stopped) for some reason such as there being no more sheet-form members for box-making, productivity could decrease because the boxing step cannot be performed. In view of this, a stocking space to stock a plurality of packaging boxes is normally formed in a boxing device, and the boxing device is operated with a predetermined number of packaging boxes stocked in this stocking space.

Because packaging boxes packed with products differ with each type of product packed therein (packed product), when the type of packed product is switched, the packaging boxes are normally switched to another type of packaging box. Concerning this switch, when the type of packed product is switched, the stocked packaging box is sometimes discarded. In such scenarios, as the numerical quantity of stocked packaging boxes increases, there is also likely to be an increase in the numerical quantity of packaging boxes discarded when the type of packed product switches. When the numerical quantity of discarded packaging boxes increases, cost is increased in association with the fact that the materials used to make boxes are not utilized effectively.

In the boxing device 40 according to the above embodiment, the controller 90 executes the stocking number deciding process to decide the numerical quantity (stocking number SV) of cardboard boxes B (packaging boxes) stocked in the stocking space SP, on the basis of the weighing machine information (packaging-machine-related information relating to the operating situation of the packaging machine), the normal stocked numerical quantity PV (user-set information), and the minimum stocked numerical quantity MV (user-set information). The stocking number SV is thereby decided on the basis of the weighing machine information, the normal stocked numerical quantity PV, and the minimum stocked numerical quantity MV. As a result, when the boxing device 40 is operating, the stocking number SV can be adjusted in real time.

For example, when the boxing device 40 is operating, the stocking number deciding process (the third stocking number deciding process) is executed on the basis of the weighing machine information, whereby the stocking number SV can be reduced in accordance with the remaining numerical quantity of products P (the remaining product number RV) to undergo the boxing action while the set numerical quantity CV of cardboard boxes B are stocked.

An alternative is that when the boxing device 40 is operating, the stocking number deciding process (the first stocking number deciding process or the second stocking number deciding process) is executed on the basis of the normal stocked numerical quantity PV (user-set information) or the minimum stocked numerical quantity MV (user-set information), whereby the stocking number SV can be set to the necessary minimum numerical quantity, which is based on user settings.

Consequently, when the box-making section 60 has stopped for any reason, the discarding of stocked cardboard boxes B is restrained while restraining the stopping of the boxing action. Specifically, cost increase is restrained while decrease in productivity is restrained.

### (7-2)

In the boxing device 40 of the above embodiment, the weighing machine information specifies the weight of the commodities C (inside the combination weighing machine 10). Due to this, in the stocking number deciding process (the third stocking number deciding process), on the basis of the weight of the commodities C supplied to the bag-making and packaging machine 20, the remaining numerical quantity of products P is calculated and the stocking number SV is decided. As a result, the stocking number SV can be reduced to the necessary minimum quantity as the weight of the commodities C decreases (i.e., the remaining numerical quantity of products P to undergo the boxing action becomes fewer).

### (7-3)

In the above embodiment, the controller 90 is configured so that during the automatic adjustment mode, the controller 90 calculates the remaining numerical quantity of products P (remaining product number RV) to undergo the boxing action on the basis of the weighing machine information, and executes the stocking number deciding process (the third stocking number deciding process) to decide the stocking number SV on the basis of the calculated remaining numerical quantity of products P.

Due to this, the remaining numerical quantity of products P to undergo the boxing action is calculated on the basis of the weighing machine information, and the stocking number SV of cardboard boxes B is decided on the basis of the calculated remaining numerical quantity of products P. As a result, as the remaining numerical quantity of products P to undergo the boxing action decreases, it becomes possible for the numerical quantity of stocked cardboard boxes B to be reduced with high accuracy to the necessary minimum quantity.

### (7-4)

In the above embodiment, the controller 90 is configured so as to execute the stocking number deciding process (the third stocking number deciding process) on the basis of the numerical quantity of products P (the packed tier number FV and the tier-configuring product number DV) packed into a cardboard box B.

The stocking number SV of cardboard boxes B is thereby decided also on the basis of the numerical quantity of products P packed into one cardboard box B. As a result, as the remaining numerical quantity of products P (the remaining product number RV) to undergo the boxing action decreases, it becomes possible for the numerical quantity of stocked cardboard boxes B to be reduced with high accuracy to the necessary minimum quantity.

### (7-5)

In the above embodiment, the controller 90 has, as control modes, the normal mode (the first control mode), the small-quantity mode (the first control mode), and the automatic adjustment mode (the second control mode). The controller 90 is configured so as to, on the basis of an automatic adjustment mode selection command inputted to the command input part 92, transition from the normal mode or the small-quantity mode to the automatic adjustment mode and execute the third stocking number deciding process.

The third stocking number deciding process is thereby performed, in which the stocking number SV in the stocking space SP is adjusted in real time, on the basis of a command (the automatic adjustment mode selection command) inputted by the user. Specifically, the user is able to select, as necessary, whether or not to perform the third stocking number deciding process to adjust the stocking number SV in real time.

### (7-6)

In the above embodiment, the boxing device 40 includes the box-making section 60 to perform the action of making cardboard boxes B. When the remaining numerical quantity of products P (the remaining product number RV) to undergo the boxing action is assumed to be less than the first threshold value ΔTh1, in response to the stocking number SV calculated by the third stocking number deciding process being zero (boxes), the controller 90 outputs a stop command to the box-making section 60 and causes the box-making action to stop,.

Due to this, after the stocking number SV has been adjusted on the basis of the stocking number SV calculated on the basis of the stocking number deciding process, and the remaining numerical quantity of products P (the remaining product number RV) to undergo the boxing action, the box-making action is stopped. As a result, as the remaining numerical quantity of products P to undergo the boxing action decreases, it becomes possible for the numerical quantity of stocked cardboard boxes B to be reduced with high accuracy to the necessary minimum quantity.

### (8) Modifications

Modifications of the present embodiment are presented below. The following modifications may be combined as appropriate, as long as there are no discrepancies.

### (8-1) Modification A

In the above embodiment, on the basis of the weighing machine information (packaging-machine-related information relating to the operating situation of the packaging machine), the normal stocked numerical quantity PV, and the minimum stocked numerical quantity MV (user-set information), the controller 90 executes stocking number deciding processes (the first stocking number deciding process, the second stocking number deciding process, and the third stocking number deciding process) to decide the numerical quantity (stocking number SV) of cardboard boxes B stocked in the stocking space SP.

For the sake of improving the versatility of the devices, it is preferable to increase variation of the processes and have the user select a desired process in accordance with the installation location. However, the stocking number deciding processes executed by the controller 90 may include any of the first stocking number deciding process, the second stocking number deciding process, and the third stocking number deciding process. In other words, any of the first stocking number deciding process, the second stocking number deciding process, and the third stocking number deciding process can be omitted as the stocking number deciding processes executed by the controller 90.

Specifically, the controller 90 may be configured so as to execute only the third stocking number deciding process based on the weighing machine information (packaging-machine-related information relating to the operating situation of the packaging machine). Alternatively, the controller 90 may be configured so as to execute only the first stocking number deciding process and/or the second stocking number deciding process based on the normal stocked numerical quantity PV (user-set information) and/or the minimum stocked numerical quantity MV (user-set information).

Even in such a scenario, when the boxing device 40 is operating, the stocking number SV can be adjusted so that when the type of products P produced in the product production line 100 is changed or when production of the products P is ended, the number of cardboard boxes B stocked in the stocking space SP reaches zero (boxes) or approaches zero (boxes) (i.e., so that there are unlikely to be extra boxes). Specifically, cost increase is restrained while decrease in productivity is restrained.

### (8-2) Modification B

In the above embodiment, the controller 90 executes the third stocking number deciding process on the basis of the weighing machine information (information specifying the weight value of the commodities C) in the combination weighing machine 10. However, the information that the controller 90 uses as a base in executing the third stocking number deciding process is not necessarily limited to the weighing machine information and can be changed as appropriate. For example, when information specifying the weight value of the supplied commodities C or information specifying the remaining product number RV is held in another device, the controller 90 may execute the third stocking number deciding process on the basis of this information.

### (8-3) Modification C

In the above embodiment, in the third stocking number deciding process, the controller 90 decides as the stocking number SV, a value calculated (with numerals past the decimal point rounded up) through the calculation formula "RV/(FV^{∗}DV)" when the remaining product number RV is less than the first threshold value ΔTh1. However, the controller 90 may also be configured so as to decide a value calculated using another calculation formula as the stocking number SV in the third stocking number deciding process.

For example, the controller may be configured so as to decide, as the stocking number SV, a value calculated (with numerals past the decimal point rounded up) by dividing the weight value of the commodities C supplied to a device upstream of the boxing device 40 (e.g., the combination weighing machine 10 or the bag-making and packaging machine 20) by the total weight of products packaged in one cardboard box B (i.e., FV ^{∗} DV ^{∗} weight (g) of products P) (when this value exceeds the set numerical quantity CV, the set numerical quantity CV is decided as the stocking number SV).

### (8-4) Modification D

In the above embodiment, the box-making section 60 is included in the boxing device 40. However, the box-making section 60 need not be in the boxing device 40, and can be omitted as appropriate. In such a scenario, the box-making device to make cardboard boxes B may be arranged independent from the boxing device 40.

### (8-5) Modification E

In the above embodiment, the stocking section 711 is provided in the frame 41 configuring the outer contours of the boxing device 40. Specifically, the stocking space SP is arranged inside the frame 41 where the boxing action is performed. However, the stocking space SP may be formed in a location other than the space inside the frame 41. In such a scenario, a conveyor may be installed to move the cardboard boxes B from the stocking space SP to the packing section 713.

### (8-6) Modification F

In the above embodiment, the installed position of the management computer 80 is not clearly stated in particular, but no particular limitation is provided in terms of the installed location of the management computer 80. For example, the management computer 80 may be installed in the same premises inside the factory where the product production line 100 is configured, and may be connected so as to be able to communicate over a local area network (LAN) with the control parts (1A to 8A, 10A, 20A, 40A, and 50A) of other devices. Additionally, for example, the management computer 80 may be installed outside of the premises in the factory where the product production line 100 is configured, and may be connected so as to be able to communicate over a wide area network (WAN) with the control parts of other devices.

### (8-7) Modification G

In the above embodiment, the controller 90 is configured by electrically connecting the management computer 80 and the control parts (1A to 8A, 10A, 20A, 40A, and 50A) of the devices in the product production lines 100. However, this manner of configuring the controller 90 is not provided by way of limitation and can be changed as appropriate. For example, if the management computer 80 (or a device equivalent to the management computer 80) and the control parts 40A of the boxing devices 40 in the product production lines 100 are electrically connected, the controller 90 may be configured with the control parts of some/all of the other devices omitted. In such a scenario, the controller 90 is preferably configured so as to acquire, as appropriate, the information (weighing machine information) needed for the stocking number deciding process from the combination weighing machine 10 and/or other devices.

### (8-8) Modification H

The above-described aspect is not provided by way of limitation on the configuration of the group of devices in the product production line 100, and can be changed as appropriate. In the product production line 100, devices other than the devices 1 to 8, 10, 20, 40, and 50 may be included, and some devices may be omitted.

### (8-9) Modification I

In the product production line 100 of the above embodiment, potato chips are produced as commodities C, and products P are produced by packaging the potato chips. However, the commodities C manufactured in the product production line 100 (commodities packaged as products P) may be commodities other than potato chips (foodstuffs are not particularly provided by way of limitation).

### INDUSTRIAL APPLICABILITY

The present invention can be utilized in a boxing device to pack products into a box for packaging, which is made from a sheet-form member.

### REFERENCE SIGNS LIST

- 10: Combination weighing machine
- 12: Scattering table
- 13: Supply feeder
- 15: Weighing hopper
- 20: Bag-making and packaging machine
- 40: Boxing device
- 41: Frame
- 60: Box-making section
- 61: Sheet-stacking mechanism
- 62: Transferring mechanism
- 63: Box-making mechanism
- 65: Boxing section (boxing mechanism)
- 65a: Boxing section first unit
- 65b: Boxing section second unit
- 67: Product arrangement section
- 68: Product conveyor
- 69: Product-accumulating mechanism
- 70: Product group movement mechanism
- 71: Box-handling section
- 80: Management computer
- 90: Controller
- 91: Weighing machine information storage part
- 92: Command input part
- 93: Command storage part
- 94: Box-making action control part
- 100: Product production line
- 691: Accumulating head
- 692: Accumulating suction-holding tools
- 693: Arm
- 694: Servo mechanism
- 695: Suction tube
- 701: Packing head
- 702: Packing suction-holding tools
- 711: Stocking section (space-forming section)
- 712: Box-carrying conveyor
- 713: Packing section (packaging box placement section)
- AP: Early-stage device conveyor
- AS: Later-stage device conveyor
- B: Cardboard box (packaging box)
- BC: Bottom cover
- C: Commodities
- CV: Set numerical quantity
- DV: Tier-configuring product number
- FB: Box-making sheet
- FV: Packed tier number
- G: Product group
- MV: Minimum stocked numerical quantity
- P: Products
- PV: Normal stocked numerical quantity
- RV: Remaining product number
- SP: Stocking space
- SV: Stocking number
- ΔTh1: First threshold value

### CITATION LIST

### PATENT LITERATURE

[Patent Literature 1] Japanese Patent No. 4027506

## Claims

1. A boxing device comprising:
a stocking section (711) inside of which a stocking space (SP) for stocking a plurality of packaging boxes made from sheet-form members is formed;
a packing section (713) configured and arranged to receive packaging boxes sent from the stocking section (711);
a boxing mechanism (65) configured and arranged to perform a boxing action of packing a plurality of products discharged from a packaging machine, which is configured to package supplied commodities into a bag formed of packaging material and to discharge the package as a product, into the packaging boxes placed on the packing section (713); and
a controller (80) configured and arranged to execute a stocking number deciding process to decide a numerical quantity of the packaging boxes stocked in the stocking space (SP) on the basis of predetermined information, the controller configured and arranged to execute the stocking number deciding process on the basis of packaging-machine-related information relating to an operating situation of the packaging machine, and/or user-set information set by a user.

2. The boxing device according to claim 1, wherein
the packaging-machine-related information is information specifying the weight of the commodities.

3. The boxing device according to claim 1 or 2, wherein
the controller (80) is configured and arranged to calculate a remaining numerical quantity of the products to undergo the boxing action on the basis of the packaging-machine-related information, and the controller is configured and arranged to execute the stocking number deciding process on the basis of the calculated remaining numerical quantity of the products.

4. The boxing device according to any one of claims 1 to 3, wherein
the controller (80) is configured and arranged to execute the stocking number deciding process on the basis of the numerical quantity of the products packed into the packaging boxes.

5. The boxing device according to any one of claims 1 to 4, wherein
the boxing device further comprises a command input part through which a command for the controller is inputted; and
the controller (80) is configured and arranged to have a first control mode and a second control mode as control modes, the controller is configured and arranged to transition from the first control mode to the second control mode on the basis of the command inputted to the command input part, and the controller is configured and arranged to execute the stocking number deciding process in the second control mode.

6. The boxing device according to any one of claims 1 to 5, wherein
the boxing device further comprises a box-making section configured and arranged to perform a step of making the packaging boxes, and
when the remaining numerical quantity of the products to undergo the boxing action is assumed to be less than a first threshold value, the controller outputs a stop signal instructing the box-making section to stop the step of making the packaging boxes.

## Patentansprüche

1. Schachtelverpackungsvorrichtung, die aufweist:
einen Lagerabschnitt (711), in dem ein Lagerraum (SP) zur Lagerung von mehreren Verpackungsschachteln ausgebildet ist, die aus bogenförmigen Elementen hergestellt sind;
einen Verpackungsabschnitt (713), der konfiguriert und eingerichtet ist, Verpackungsschachteln aufzunehmen, die vom Lagerabschnitt (711) geschickt werden;
einen Schachtelverpackungsmechanismus (65), der konfiguriert und eingerichtet ist, einen Schachtelverpackungsvorgang zum Verpacken von mehreren Produkten, die aus einer Verpackungsmaschine ausgestoßen werden, die konfiguriert ist, zugeführte Handelsartikel in einem aus einem Verpackungsmaterial ausgebildeten Beutel zu verpacken und die Packung als ein Produkt auszustoßen, in die am Verpackungsabschnitt (713) angeordneten Verpackungsschachteln durchzuführen; und
eine Steuereinrichtung (80), die konfiguriert und eingerichtet ist, einen Lageranzahlbeurteilungsprozess auszuführen, um eine nummerische Menge der im Lagerraum (SP) gelagerten Verpackungsschachteln auf der Grundlage von vorgegebenen Informationen zu beurteilen, wobei die Steuereinrichtung konfiguriert und eingerichtet ist, den Lageranzahlbeurteilungsprozess auf der Grundlage von verpackungsmaschinenbezogenen Informationen, die eine Betriebssituation der Verpackungsmaschine betreffen, und/oder auf benutzerfestgelegten Informationen auszuführen, die durch einen Benutzer festgelegt werden.

2. Schachtelverpackungsvorrichtung nach Anspruch 1, wobei die verpackungsmaschinenbezogenen Informationen Informationen sind, die das Gewicht des Handelsartikels angeben.

3. Schachtelverpackungsvorrichtung nach Anspruch 1 oder 2, wobei
die Steuereinrichtung (80) konfiguriert und eingerichtet ist, eine restliche numerische Menge der dem Schachtelverpackungsvorgang zu unterziehenden Produkte auf der Grundlage der verpackungsmaschinenbezogenen Informationen zu berechnen, und die Steuereinrichtung konfiguriert und eingerichtet ist, den Lageranzahlbeurteilungsprozess auf der Grundlage der berechneten restlichen numerischen Menge der Produkte auszuführen.

4. Schachtelverpackungsvorrichtung nach einem der Ansprüche 1 bis 3, wobei
die Steuereinrichtung (80) konfiguriert und eingerichtet ist, den Lageranzahlbeurteilungsprozess auf der Grundlage der numerischen Menge der in den Verpackungsschachteln verpackten Produkte auszuführen.

5. Schachtelverpackungsvorrichtung nach einem der Ansprüche 1 bis 4, wobei
die Schachtelverpackungsvorrichtung ferner einen Befehlseingabeteil aufweist, durch den ein Befehl für die Steuereinrichtung eingegeben wird; und
die Steuereinrichtung (80) konfiguriert und eingerichtet ist, einen ersten Steuermodus und einen zweiten Steuermodus als Steuermodi aufzuweisen, die Steuereinrichtung konfiguriert und eingerichtet ist, vom ersten Steuermodus in den zweiten Steuermodus auf der Grundlage des Befehls überzugehen, der in den Befehlseingabeteil eingegeben wird, und die Steuereinrichtung konfiguriert und eingerichtet ist, den Lageranzahlbeurteilungsprozess im zweiten Steuermodus auszuführen.

6. Schachtelverpackungsvorrichtung nach einem der Ansprüche 1 bis 5, wobei
die Schachtelverpackungsvorrichtung ferner einen Schachtelherstellungsabschnitt aufweist, der konfiguriert und eingerichtet ist, einen Schritt zum Herstellen der Verpackungsschachteln durchzuführen, und
wenn angenommen wird, dass die restliche numerische Menge der dem Schachtelverpackungsvorgang zu unterziehenden Produkte kleiner als ein erster Schwellenwert ist, die Steuereinrichtung eine Stoppsignal ausgibt, das dem Schachtelherstellungsabschnitt befiehlt, den Schritt zum Herstellen der Verpackungsschachteln zu stoppen.

## Revendications

1. Dispositif de conditionnement en boîte comprenant :
une section de stockage (711) à l'intérieur de laquelle est formé un espace de stockage (SP) pour stocker une pluralité de boîtes d'emballage constituées d'éléments en forme de feuille ;
une section d'emballage (713) configurée et agencée pour recevoir des boîtes d'emballage envoyées par la section de stockage (711) ;
un mécanisme de conditionnement en boîte (65) configuré et agencé pour effectuer une action de conditionnement en boîte consistant à emballer une pluralité de produits déchargés d'une machine d'emballage, qui est configurée pour emballer les produits fournis dans un sac formé de matériau d'emballage et pour décharger l'emballage en tant que produit, dans les boîtes d'emballage placées sur la section d'emballage (713) ; et
un dispositif de commande (80) configuré et agencé pour exécuter un processus de décision de numéro de stock pour décider d'une quantité numérique des boîtes d'emballage stockées dans l'espace de stockage (SP) sur la base d'informations prédéterminées, le dispositif de commande étant configuré et agencé pour exécuter le processus de décision de numéro de stock sur la base d'informations relatives à la machine d'emballage concernant une situation de fonctionnement de la machine d'emballage et/ou des informations définies par l'utilisateur définies par un utilisateur.

2. Dispositif de conditionnement en boîte selon la revendication 1, dans lequel les informations relatives à la machine d'emballage sont des informations spécifiant le poids des marchandises.

3. Dispositif de conditionnement en boîte selon la revendication 1 ou 2, dans lequel le dispositif de commande (80) est configuré et agencé pour calculer une quantité numérique restante des produits devant subir l'action de conditionnement en boîte sur la base des informations relatives à la machine d'emballage, et le dispositif de commande est configuré et agencé pour exécuter le processus de décision de numéro de stock sur la base de la quantité numérique restante calculée des produits.

4. Dispositif de conditionnement en boîte selon l'une quelconque des revendications 1 à 3, dans lequel le dispositif de commande (80) est configuré et agencé pour exécuter le processus de décision du numéro de stock sur la base de la quantité numérique des produits emballés dans les boîtes d'emballage.

5. Dispositif de conditionnement en boîte selon l'une quelconque des revendications 1 à 4, dans lequel le dispositif de conditionnement en boîte comprend en outre une partie d'entrée de commande par laquelle une commande pour le dispositif de commande est entrée ; et
le dispositif de commande (80) est configuré et agencé pour avoir un premier mode de commande et un second mode de commande comme modes de commande, le dispositif de commande est configuré et agencé pour passer du premier mode de commande au second mode de contrôle sur la base de la commande entrée dans la partie d'entrée de commande, et le dispositif de commande est configuré et agencé pour exécuter le processus de décision de numéro de stock dans le second mode de commande.

6. Dispositif de conditionnement en boîte selon l'une quelconque des revendications 1 à 5, dans lequel le dispositif de conditionnement en boîte comprend en outre une section de fabrication de boîtes configurée et agencée pour effectuer une étape de fabrication des boîtes d'emballage, et lorsque la quantité numérique restante des produits devant subir l'action de conditionnement en boîte est supposée être inférieure à une première valeur seuil, le dispositif de commande émet un signal d'arrêt demandant à la section de fabrication de boîtes d'arrêter l'étape de fabrication des boîtes d'emballage.
